# FASCICULE DE BREVET EUROPEEN

(11) **EP 2 612 037 B1**
(45) Date de publication et mention de la délivrance du brevet: **18.12.2019**
(21) Numéro de dépôt: 11764825.3
(22) Date de dépôt: 31.08.2011
(51) Int. Cl.: F02K 9/46, F04D 7/02, F04D 13/04, F04D 29/047, F04D 29/049, F16C 21/00

(54) **TURBOPOMPE, EN PARTICULIER POUR L'ALIMENTATION DE MOTEURS DE FUSEE**
TURBOPUMPE, IM BESONDEREN ZUR VERSORGUNG VON RAKETENMOTOREN MIT GAS
TURBOPUMP, PARTICULARLY FOR SUPPLYING ROCKET ENGINES WITH GAS

(30) Priorité: 03.09.2010 FR 1057013
(43) Date de publication de la demande: 10.07.2013
(73) Titulaire: ARIANEGROUP SAS, 75015 Paris (FR)
(72) Inventeur: DANGUY, François, F-27510 Tourny (FR); FABBRI, Laurent, F-27620 Gasny (FR); GUINGO, Sébastien, F-27120 Pacy Sur Seine (FR)
(74) Mandataire: Calvo de Nó, Rodrigo
(86) Numéro de dépôt international: PCT/FR2011/052001
(87) Numéro de publication internationale: WO 2012/089943

(56) Documents cités:
- GB-A- 727 649
- US-A- 2 475 316
- US-A- 2 750 892
- US-A- 2 839 005
- US-A- 4 430 011
- US-A- 5 209 652
- US-A- 5 529 464

## Description

La présente invention concerne les turbopompes, et en particulier les turbopompes d'alimentation des chambres de combustion des moteurs fusées en propergols réducteurs et/ou oxydants, plus en particulier en propergols cryogéniques.

Une turbopompe comporte une pompe et une turbine reliées par un arbre rotatif commun, de manière à ce que la rotation du rotor de la turbine entraîne celle du rotor de la pompe. Typiquement, afin de minimiser le poids et l'encombrement de la turbopompe, l'arbre commun est soutenu par un premier et un deuxième paliers, le premier palier étant plus proche de la pompe et le deuxième de la turbine. Les rotors de la pompe et de la turbine se retrouvent ainsi normalement en porte-à-faux par rapport, respectivement, aux premier et deuxième paliers. Une telle turbopompe est par exemple connue du document GB 727,649 A.

Etant donné les contraintes auxquelles les turbopompes sont normalement soumises, en termes de vitesse de rotation, couple et vibration, il est normalement nécessaire de lubrifier ces paliers. Une solution qui a été généralement adoptée dans le domaine des turbopompes d'alimentation des moteurs-fusées en propergols, et en particulier en propergols cryogéniques, est de lubrifier ces paliers avec le fluide pompé. Ceci présente toutefois l'inconvénient de nécessiter normalement une barrière d'étanchéité entre le deuxième palier, soutenant l'extrémité de l'arbre reliée à la turbine, et la turbine. Une telle barrière d'étanchéité présente toutefois un certain encombrement qui accroît le porte-à-faux de la turbine, pénalisant la dynamique de l'arbre.

L'étanchéité entre les gaz propulsant la turbine et le fluide pompé est encore plus importante quand ces gaz et ce fluide sont chimiquement réactifs entre eux. Notamment, dans les turbopompes d'alimentation des moteurs-fusées en propergol, les gaz de propulsion de la turbine sont normalement réducteurs, ce qui imposera en général une étanchéité absolue dans les turbopompes à oxydant pour séparer le fluide oxydant pompé des gaz réducteurs propulsant la turbine. Dans ce cas, il a été proposé de lubrifier le deuxième palier, qui soutient l'arbre du côté de la turbine, non pas avec le fluide pompé par cette turbopompe, mais avec un fluide réducteur, et de séparer ce fluide réducteur du fluide oxydant pompé et lubrifiant le premier palier du côté de la pompe, avec un joint dynamique autour de l'arbre entre les deux paliers, dans lequel on injecte un fluide inerte, de manière à assurer une séparation absolue entre les fluides oxydant et réducteur. Cette solution est toutefois complexe, et difficile à intégrer dans une turbopompe de petites dimensions. En outre, elle n'affranchit pas la turbopompe du besoin d'intégrer une barrière d'étanchéité aussi entre le deuxième palier et la turbine, avec les inconvénients déjà expliqués.

La présente invention vise à remédier à ces inconvénients. Ce but est atteint grâce au fait que, dans une turbopompe suivant au moins un mode de réalisation de l'invention, le deuxième palier, c'est-à-dire, le palier plus proche de la turbine, est un palier hydrodynamique relié à une source d'alimentation en gaz compatible avec les gaz d'alimentation de la turbine, la turbopompe comportant en outre un joint d'étanchéité dynamique autour de l'arbre, interposé entre ledit deuxième palier et le premier palier, c'est-à-dire, celui plus proche de la pompe.

Grâce à ces dispositions, le deuxième palier ne doit plus être alimenté en un fluide lubrifiant distinct des gaz de propulsion de la turbine. Il n'est donc plus nécessaire d'intégrer une barrière d'étanchéité entre le deuxième palier et la turbine, ce qui permet de réduire sensiblement le porte-à-faux de celle-ci.

Avantageusement, la pompe de cette turbopompe peut être une pompe à fluide cryogénique. Comme le deuxième palier n'est plus, dans cette turbopompe suivant l'invention, nécessairement alimenté en fluide cryogénique, cette disposition permet de ne mettre en froid qu'une partie réduite de la turbopompe limitée aux pompes et leurs paliers. Entre autres, ceci permet de minimiser les fuites de fluide cryogénique et de réduire la consommation de gaz de barrage, p.ex. d'hélium gazeux, pendant une phase de mise en froid de la pompe.

Avantageusement, ladite pompe peut être une pompe à propergol, en particulier à oxydant ou à réducteur. La disposition de cette turbopompe permet d'obtenir une compacité et une légèreté particulièrement avantageuses dans les systèmes d'alimentation en propergols, en particulier pour les moteurs-fusées, tout en assurant une étanchéité particulièrement avantageuse dans le maniement de fluides chimiquement réactifs, tels que les propergols.

Avantageusement, ledit joint d'étanchéité dynamique peut être relié à une source de fluide inerte, de manière à créer une barrière fluide entre les gaz du palier hydrodynamique, et le premier palier. Une telle barrière fluide permet d'obtenir une étanchéité particulièrement élevé, et sera donc d'autant plus avantageuse qu'il sera nécessaire de séparer les différents fluides, par exemple à cause de leur réactivité chimique.

Avantageusement, ledit premier palier peut être relié à la pompe pour l'alimentation du premier palier en fluide provenant de la pompe. Ainsi, le fluide pompé peut servir à la lubrification du premier palier, ce qui permet de maintenir un arrangement comparativement simple de la turbopompe, fiable et à faible poids et encombrement. Plus avantageusement encore, ledit premier palier peut être un palier à roulement, lequel offre une très faible résistance à la rotation de l'arbre, même à des très grandes vitesses de rotation, telles que celles qu'on retrouve normalement dans une turbopompe en fonctionnement. Aussi plus avantageusement, ladite pompe peut comporter en outre une pompe auxiliaire, de préférence actionnée par ledit arbre, pour l'évacuation dudit fluide du premier palier. En particulier, lorsque la pompe est une pompe centrifuge, la pompe auxiliaire peut prendre la forme d'une contrepompe aux aubes formées sur une face arrière d'un rotor de la pompe. Ceci permet d'orienter l'évacuation du fluide, en particulier son retour à un flux principal de la pompe.

Dans au moins un mode de réalisation particulièrement avantageux de la présente invention, ledit arbre commun peut être apte à adopter une position de repos, dans laquelle il ferme un joint statique autour de cet arbre, et à être axialement déplacé, à partir de cette position de repos, vers une position de marche, à l'encontre d'un effort de rappel exercé par au moins un élément élastique. Ainsi, au repos, le joint statique empêche sensiblement la fuite de fluide du premier palier en direction du joint dynamique et du deuxième palier. Dans la position de marche, par contre, le contact au joint statique est annulé de manière à éviter le frottement. Cet arrangement facilite donc le remplissage du premier palier avec du fluide avant le démarrage de la turbopompe. En particulier dans les turbopompes cryogéniques la mise en froid préalable au démarrage se retrouve facilitée, tout en limitant les fuites de fluide cryogénique.

La présente invention concerne aussi un procédé d'utilisation de cette turbopompe, dans lequel le premier palier est lubrifié par du fluide provenant de la pompe, ledit joint statique empêchant sensiblement le passage dudit fluide lubrifiant en direction du joint dynamique et du deuxième palier lorsque la turbopompe est à l'arrêt, et s'ouvrant lors du démarrage de la turbopompe par un déplacement axial de l'arbre en direction de la pompe.

Plus avantageusement, ladite pompe peut présenter un passage axial d'admission situé sur un côté de cette pompe qui est opposé audit premier palier, et ladite position de marche est située en direction de la pompe par rapport à ladite position de repos. Suite au démarrage de la turbopompe, la force axiale exercée sur l'arbre en réaction à la succion générée par la pompe à son passage d'admission déplacera donc l'arbre vers la position de marche de manière automatique.

Encore plus avantageusement, afin d'arrêter ladite position de marche, un élément axialement solidaire de l'arbre mais libre en rotation par rapport à cet arbre peut faire butée contre un stator solidaire d'un carter de la turbopompe en direction de la pompe dans ladite position de marche. En particulier, ledit élément axialement solidaire de l'arbre mais libre en rotation par rapport à cet arbre peut être solidaire d'une piste extérieure du premier palier.

Aussi encore plus avantageusement, afin d'arrêter ladite position de repos, un élément axialement solidaire à l'arbre peut faire butée contre un stator solidaire d'un carter de la turbopompe en direction de la turbine dans ladite position de repos.

Dans une première alternative, en particulier lorsque la turbine est une turbine à gaz à température modérée, la source d'alimentation en gaz du palier hydrodynamique peut être la turbine elle-même. L'arrangement de la turbine se retrouve ainsi simplifié.

Dans une deuxième alternative, en particulier quand la turbine est une turbine à gaz chauds et la turbopompe est une turbopompe d'alimentation en propergol d'une chambre de propulsion, ladite source d'alimentation en gaz du palier hydrodynamique peut être une sortie d'un circuit régénératif de la chambre de propulsion.

L'invention concerne également un moteur-fusée comprenant au moins une turbopompe selon l'invention pour l'alimentation d'au moins une chambre de propulsion dudit moteur-fusée en au moins un propergol, p.ex. un fluide réducteur et/ou un fluide oxydant.

Grâce à la compacité, légèreté, fiabilité et simplicité de la turbopompe de l'invention, son application dans les moteurs-fusées est particulièrement avantageuse, en particulier dans les moteurs-fusées de très faible poussée, et ceux à propergols cryogéniques.

L'invention sera bien comprise et ses avantages apparaîtront mieux, à la lecture de la description détaillée qui suit, de modes de réalisation représentés à titre d'exemples non limitatif. La description se réfère aux dessins annexés sur lesquels :
- la figure 1 est une vue en coupe longitudinale d'une turbopompe de l'état de la technique pour l'alimentation d'une chambre de combustion de moteur-fusée en propergol réducteur cryogénique liquide,
- la figure 2 est une vue en coupe longitudinale d'une turbopompe de l'état de la technique pour l'alimentation d'une chambre de combustion de moteur-fusée en propergol oxydant cryogénique liquide,
- la figure 3 est une vue en coupe d'une turbopompe suivant un premier mode de réalisation de l'invention pour l'alimentation d'une chambre de combustion de moteur-fusée en propergol réducteur cryogénique liquide,
- la figure 3a est une vue de détail de la turbopompe de la figure 3 en position de repos,
- la figure 3b est une vue de détail de la turbopompe de la figure 3 en position de marche,
- la figure 4 est une vue en coupe d'une turbopompe suivant un deuxième mode de réalisation de l'invention pour l'alimentation d'une chambre de combustion de moteur-fusée en propergol oxydant cryogénique liquide,
- la figure 4a est une vue de détail de la turbopompe de la figure 4 en position de repos, et
- la figure 4b est une vue de détail de la turbopompe de la figure 3 en position de marche.

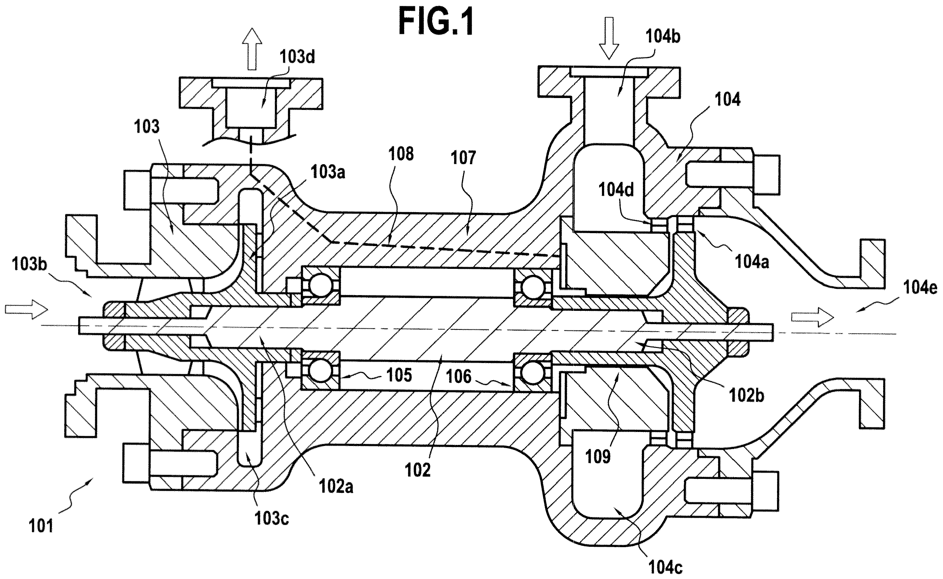

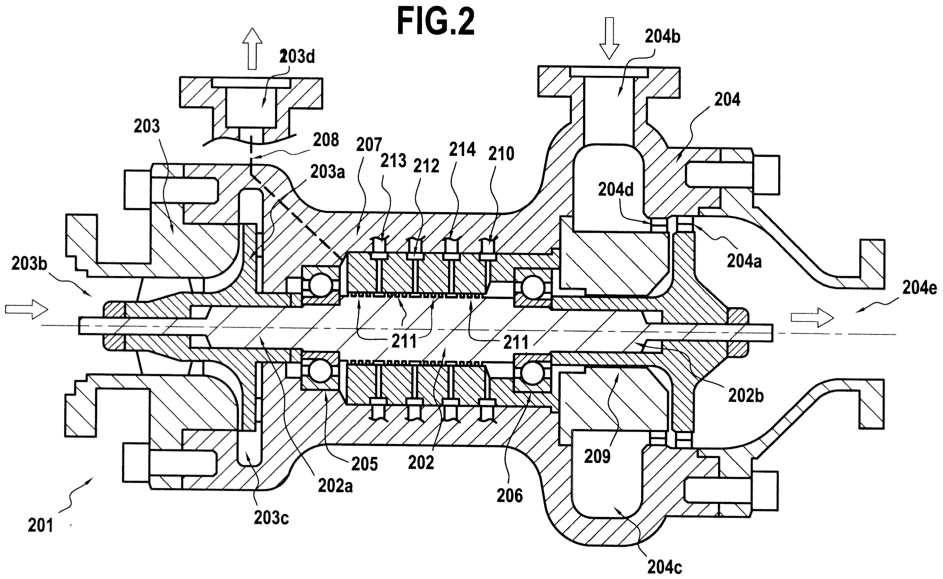

Afin de mieux comprendre l'invention, on commence par décrire les deux turbopompes 101 et 201 de l'état de la technique représentées sur les figures 1 et 2. Dans la turbopompe 101 à propergol réducteur illustrée dans la figure 1, un arbre commun 102 relie la pompe centrifuge 103 à la turbine axiale 104. Une première extrémité 102a de l'arbre 102 est solidaire d'un rotor 103a de la pompe 103, et une deuxième extrémité 102b de l'arbre 102, opposée à ladite première extrémité 102a, est solidaire d'un rotor 104a de la turbine 104. Ainsi la rotation du rotor 104a de la turbine 104, propulsée par l'expansion de gaz entrant dans la turbine par un conduit radial d'admission 104b, un tore d'admission 104c et un distributeur 104d et sortant par un conduit axial d'échappement 104e entraine la rotation de l'arbre 102 et du rotor 103a de la pompe centrifuge 103. Le propergol réducteur, impulsé par le rotor 103a, entre dans la pompe 103 par le passage axial d'admission 103b et sort par la volute 103c et la trompette d'échappement 103d.

Deux paliers à roulements 105, 106 soutiennent l'arbre 102 dans le carter 107 de la turbopompe 101. Le premier palier 105 soutient la première extrémité 102a de l'arbre 102, tandis que le deuxième palier 106 soutient la deuxième extrémité 102b de l'arbre 102, de telle manière que la pompe 103 et la turbine 104 sont en porte-à-faux de, respectivement, le premier et le deuxième palier 105, 106.

Afin de lubrifier les paliers 105, 106 et minimiser le frottement entre surfaces solides, un faible débit 108 de propergol liquide sous pression est prélevé à la trompette 103d et réinjecté dans le carter 107 de la turbopompe 101 de manière à noyer les paliers 105, 106 en liquide. Afin de limiter les pertes de propergol liquide vers le conduit axial d'échappement 104e de la turbine 104, un joint d'étanchéité dynamique 109 sépare les paliers 105, 106 de la turbine 104. Ce joint 109 présente toutefois un certain encombrement et augmente le porte-à-faux de la turbine 104.

La turbopompe 201 à propergol oxydant illustrée dans la figure 2 présente aussi un arbre commun 202 reliant la pompe centrifuge 203 à la turbine axiale 204. Comme dans la turbopompe 101, une première extrémité 202a de l'arbre 202 est solidaire d'un rotor 203a de la pompe 203, et une deuxième extrémité 202b de l'arbre 202, opposée à ladite première extrémité 202a, est solidaire d'un rotor 204a de la turbine 204.

Dans la turbopompe 201, la pompe centrifuge 203 présente aussi un passage axial d'admission 203b, une volute 203c et une trompette d'échappement 203d. La turbine 204 présente aussi un conduit radial d'admission 204b, un tore d'admission 204c, un distributeur 204d et un conduit axial d'échappement 204e. Pompe 203 et turbine 204 fonctionnent de manière analogue à celles de la turbopompe 101, et, comme dans la turbopompe 101, l'arbre 202 est aussi soutenu par deux paliers 205, 206, laissant la pompe 203 et la turbine 204 en porte-à-faux. Toutefois, dans la turbopompe à oxydant 201, il est plus important d'éviter les fuites du propergol pompé par la pompe 203 vers la turbine 204, puisque les gaz de propulsion de la turbine 204 sont normalement réducteurs et pourraient réagir violemment avec le propergol oxydant pompé par la pompe 203.

Ainsi, dans cette turbopompe 201, un faible débit 208 de propergol liquide sous pression est aussi prélevé à la trompette 203d et réinjecté dans le carter 207, mais n'est toutefois utilisé que pour lubrifier le premier palier 205 du côté de la pompe 203. Le deuxième palier 206 est lubrifié par un faible débit 210 de fluide réducteur, prélevé ailleurs. Comme dans la turbopompe 101 précédente, un joint d'étanchéité dynamique 209 limite les fuites de ce fluide réducteur vers la turbine 204. Toutefois, afin d'éviter le contact du débit 208 de fluide oxydant et du débit 210 de fluide réducteur, la turbopompe 201 présente aussi, entre les premier et deuxième paliers 205, 206, des joints d'étanchéité dynamique 211 autour de l'arbre 202, ainsi qu'un point d'injection 212 d'un fluide inerte, tel que, par exemple, de l'hélium, et des points de purge de fluide oxydant et de fluide réducteur 213, 214 respectivement d'un côté et de l'autre du point d'injection 212. De celle manière une barrière fluide est crée entre les fluides oxydant et réducteur.

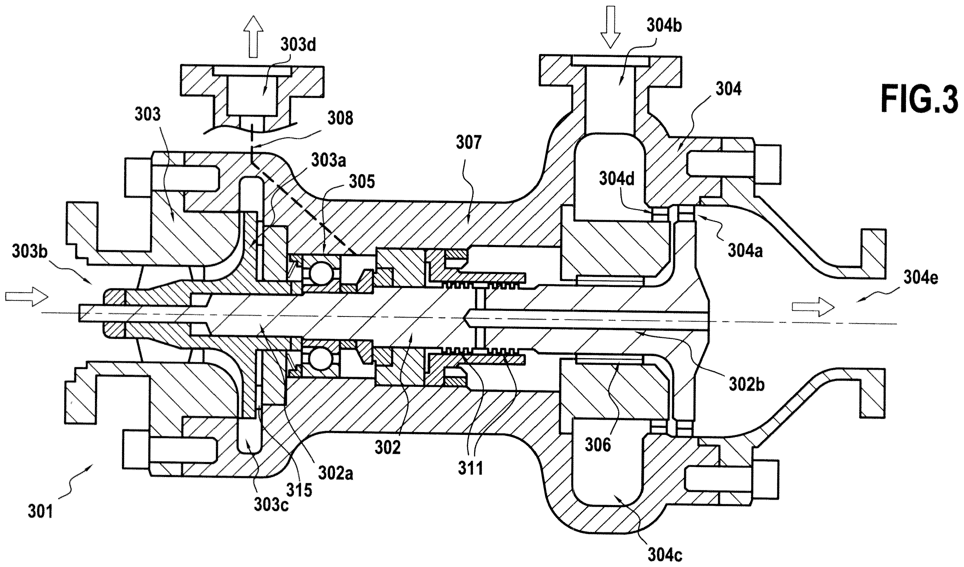

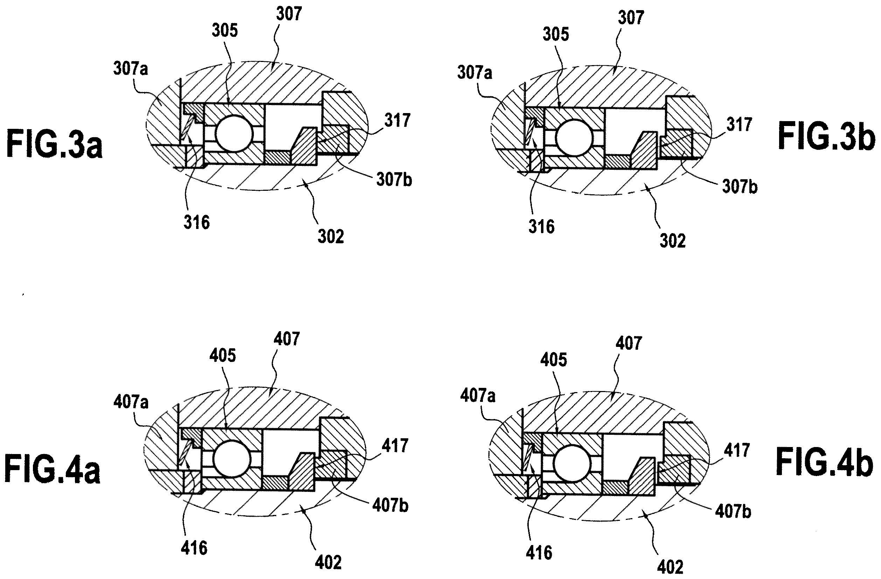

Ces turbopompes 101 et 201 de l'état de la technique présentent toutefois une certaine complexité, ainsi qu'un important porte-à-faux de la turbine. Dans un premier mode de réalisation de l'invention, illustré sur les figures 3, 3a et 3b, la turbopompe 301, qui est une turbopompe à propergol réducteur, comporte aussi, comme les turbopompes précédentes de l'état de la technique, un arbre commun 302 reliant la pompe centrifuge 303 à la turbine axiale 304, avec une première extrémité 302a de l'arbre 302 solidaire d'un rotor 303a de la pompe 303, et une deuxième extrémité 302b de l'arbre 302, opposée à ladite première extrémité 302a, solidaire d'un rotor 304a de la turbine 304.

La pompe centrifuge 303 présente aussi un passage axial d'admission 303b, une volute 303c et une trompette d'échappement 303d, et la turbine 304 un conduit radial d'admission 304b, un tore d'admission 304c, un distributeur 304d et un conduit axial d'échappement 304e. Pompe 303 et turbine 304 fonctionnent de manière analogue à celles des turbopompes 101 et 201 de l'état de la technique, et l'arbre 302 est aussi soutenu par un premier et un deuxième palier 305, 306. Un faible débit 308 de propergol liquide sous pression est aussi prélevé à la trompette 303d et réinjecté dans le carter 307 pour lubrifier le premier palier 305 du côté de la pompe 303, qui est aussi un palier à roulements. Ce fluide est ensuite évacué vers la volute 303c par une contrepompe 315 comportant des aubes formées sur une face arrière du rotor 303a de la pompe 303.

Toutefois, dans cette turbopompe 301 selon un premier mode de réalisation de l'invention, le deuxième palier 306, soutenant la deuxième extrémité 302a de l'arbre 302 à proximité de la turbine 304, est un palier hydrodynamique dans lequel un mince filet de gaz de propulsion de la turbine 304, prélevé au niveau de son tore d'admission 304c, prévient le contact direct entre surfaces solides opposées. L'utilisation d'un palier hydrodynamique pour sustenter radialement l'arbre 302 côté turbine 304 permet de se passer d'un joint d'étanchéité dynamique entre le deuxième palier 306 et la turbine 304. Aussi, du fait de son faible encombrement radial, il permet une intégration du palier 306 au plus près du rotor de turbine 304a, minimisant ou même éliminant entièrement le porte-à-faux de ce rotor 304a par rapport au palier 306. En outre, par ce même faible encombrement radial, il autorise aussi un diamètre d'arbre élevé au droit du palier 306, ce qui est aussi très favorable pour la dynamique de l'arbre 302.

Bien que dans le mode de réalisation illustré le gaz pour le palier hydrodynamique 306 soit prélevé au niveau du tore d'admission 304c, dans une alternative il pourrait être prélevé ailleurs, par exemple, si la température des gaz de propulsion de la turbine est trop élevée, en sortie d'un circuit régénératif d'une chambre de propulsion.

Pour séparer le gaz du palier hydrodynamique 306 du liquide du palier à roulements 305, quand la turbopompe 301 est en fonctionnement, cette turbopompe 301 comporte des joints d'étanchéité dynamique 311 autour de l'arbre 302, entre le palier à roulements 305 et le palier hydrodynamique 306, avec un point de purge vers le conduit axial d'échappement 304e. Toutefois, cette turbopompe 301 comporte aussi un dispositif d'étanchéité à contact facial accolé au premier palier 305, fournissant une étanchéité supplémentaire entre les deux paliers 305, 306 quand la turbopompe 301 est à l'arrêt. Le fonctionnement de ce dispositif d'étanchéité est illustré en détail dans les figures 3a et 3b.

Dans la figure 3a, on peut voir ce dispositif d'étanchéité dans sa position de repos, quand la turbopompe 301 est à l'arrêt. Un élément élastique 316, dans l'occurrence une rondelle élastique interposée entre une piste extérieure du palier 305 et un stator 307a solidaire du carter 307 de la turbopompe 301, pousse le palier 305 et avec lui l'arbre 302 en direction de la turbine 304 vers cette position de repos, dans laquelle un élément axialement solidaire de l'arbre 302 bute contre une surface opposée d'un stator 307b solidaire du carter 307 de la turbopompe 301, fermant ainsi un joint 317 autour de l'arbre 302 entre le premier palier 305 et les joints d'étanchéité dynamique 311.

Ainsi, ce dispositif d'étanchéité statique facilite la mise en froid du palier 305 à l'arrêt, en permettant de le noyer en liquide cryogénique sans fuites sensibles en direction de la turbine 304. Toutefois, quand la turbopompe 301 entre en fonctionnement, la succion exercée par la pompe 303 au passage axial d'admission 303b va exercer une traction axiale à travers le rotor 303a sur l'arbre 302, en direction de la pompe 303 et contre l'élément élastique 316, ouvrant le joint statique 317 jusqu'à arriver en butée contre un stator 307a solidaire du carter 307 en direction de la pompe 303. Cette position de marche, dans laquelle un élément solidaire de la piste extérieure du palier 305 est en butée contre un stator 307a solidaire du carter 307 en direction de la pompe 303, est illustrée sur la figure 3b. Comme le joint statique 317 est donc ouvert quand la turbopompe 301 tourne normalement, il ne provoque aucun frottement sensible.

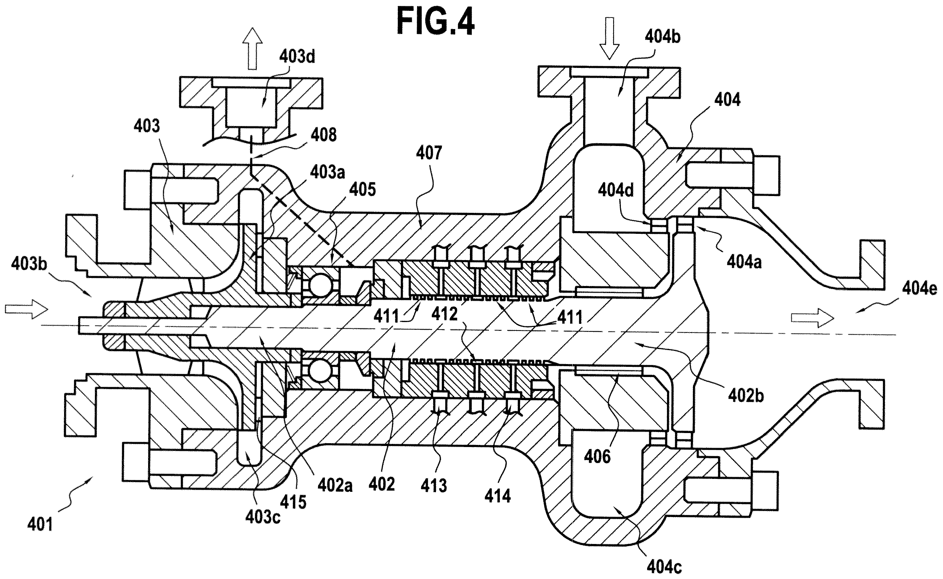

Dans un deuxième mode de réalisation de la présente invention, illustré sur les figures 4, 4a et 4b, la turbopompe 401 est une turbopompe à propergol oxydant. Elle comporte aussi, comme les turbopompes précédentes, un arbre commun 402 reliant la pompe centrifuge 403 à la turbine axiale 404, avec une première extrémité 402a de l'arbre 402 solidaire d'un rotor 403a de la pompe 403, et une deuxième extrémité 402b de l'arbre 402, opposée à ladite première extrémité 402a, solidaire d'un rotor 404a de la turbine 404.

La pompe centrifuge 403 présente aussi un passage axial d'admission 403b, une volute 403c et une trompette d'échappement 403d, et la turbine 404 un conduit radial d'admission 404b, un tore d'admission 404c, un distributeur 404d et un conduit axial d'échappement 404e. Pompe 403 et turbine 404 fonctionnent de manière analogue à celles des turbopompes précédentes, et l'arbre 402 est aussi soutenu par un premier et un deuxième palier 405, 406. Un faible débit 408 de propergol liquide sous pression est aussi prélevé à la trompette 403d et réinjecté dans le carter 407 pour lubrifier le premier palier 405 du côté de la pompe 403, qui est aussi un palier à roulements. Ce fluide lubrifiant le palier 405 y est aussi évacué ensuite vers la volute 403c par une contrepompe 415 comportant des aubes formées sur une face arrière du rotor 403a de la pompe 403.

Comme dans le premier mode de réalisation, le deuxième palier 406, soutenant la deuxième extrémité 402a de l'arbre 402 à proximité de la turbine 404, est un palier hydrodynamique dans lequel un mince filet de gaz de propulsion de la turbine 404, prélevé au niveau de son tore d'admission 404c, prévient le contact direct entre surfaces solides opposées. Alternativement, ce gaz pourrait être prélevé ailleurs, par exemple, en sortie d'un circuit régénératif d'une chambre de propulsion, si la température des gaz de propulsion de la turbine est trop élevée.

L'utilisation d'un palier hydrodynamique présente, dans ce deuxième mode de réalisation, les mêmes avantages que dans le premier mode de réalisation. Comme dans la turbopompe 201 de l'état de la technique illustrée sur la figure 2, il est toutefois important, dans cette turbopompe à oxydant 401, d'assurer une très bonne étanchéité entre les gaz réducteurs du palier hydrodynamique 406, et le fluide oxydant pompé par la pompe 403. Pour cela, cette turbopompe 401 comporte, entre le palier à roulements 405 et le palier hydrodynamique 406, à part des joints d'étanchéité dynamique 411 supplémentaires autour de l'arbre 402, un point d'injection 412 d'un fluide inerte, tel que, par exemple, de l'hélium, et des points de purge de fluide oxydant et de gaz réducteurs 413, 414 respectivement d'un côté et de l'autre du point d'injection 412. De celle manière une barrière fluide est crée entre le fluide oxydant et les gaz réducteurs.

Comme dans le premier mode de réalisation, cette turbopompe 401 comporte aussi un dispositif d'étanchéité à contact facial accolé au premier palier 405, fournissant une étanchéité supplémentaire entre les deux paliers 405, 406 quand la turbopompe 401 est à l'arrêt. Le fonctionnement de ce dispositif d'étanchéité est illustré en détail dans les figures 4a et 4b, et est analogue à celui du premier mode de réalisation, avec un élément élastique 416 de rappel du palier 405 et l'arbre 402 vers une position de repos, illustrée sur la figure 4a, en direction de la turbine 404, de manière à fermer un joint d'étanchéité 417 autour de l'arbre 402 entre le palier 405 et les joints d'étanchéité dynamiques 411, et une position de marche, illustrée sur la figure 4b, dans laquelle la succion générée par la pompe 403 au passage axial d'admission 403b exerce une traction sur le rotor de pompe 403a et l'arbre 402, déplaçant l'arbre 402 et le palier 415 en direction de la pompe 403 de manière à ouvrir le joint d'étanchéité 417.

Les turbopompes 301 et 401 peuvent en particulier être utilisées pour alimenter une chambre de propulsion (non-illustrée) d'un moteur-fusée en propergols, et, plus spécifiquement en, respectivement, réducteur liquide cryogénique et oxydant liquide cryogénique. Elles sont particulièrement adaptées pour l'alimentation de moteurs-fusées de faible poussée.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. Par conséquent, la description et les dessins doivent être considérés dans un sens illustratif plutôt que restrictif.

## Revendications

1. Turbopompe (301,401) comportant :
une pompe (303,403),
une turbine (304,404),
un arbre rotatif commun (302,402) relié à ladite pompe (303,403) et à ladite turbine (304,404),
un premier et un deuxième palier (305,405;306,406) soutenant ledit arbre rotatif commun (302,402), ledit premier palier (305,405) étant plus proche de la pompe (303,403) et ledit deuxième palier (306,406) de la turbine (304,404), et
**caractérisée en ce que** ledit deuxième palier (306,406) est un palier hydrodynamique relié à une source d'alimentation en gaz, et **en ce qu'**elle comporte en outre au moins un joint d'étanchéité dynamique (311,411) autour de l'arbre (302,402), interposé entre lesdits premier et deuxième paliers (305,405;306,406).

2. Turbopompe (301,401) selon la revendication 1, dans laquelle ladite pompe (302,402) est une pompe à fluide cryogénique.

3. Turbopompe (301,401) selon l'une quelconque des revendications 1 ou 2, dans laquelle ladite pompe (302,402) est une pompe à propergol.

4. Turbopompe (401) selon l'une quelconque des revendications 1 à 3, dans laquelle ledit joint d'étanchéité dynamique (411) est relié à une source de fluide inerte.

5. Turbopompe (301,401) selon l'une quelconque des revendications 1 à 4, dans laquelle ledit premier palier (305,405) est relié à la pompe (303,403) pour la lubrification du premier palier (305,405) avec du fluide provenant de la pompe (303,403).

6. Turbopompe (301,401) selon la revendication 5, dans laquelle ledit premier palier (305,405) est un palier à roulements.

7. Turbopompe (301,401) selon l'une quelconque des revendications 5 ou 6, comportant en outre une pompe auxiliaire (315,415) pour l'évacuation dudit fluide du premier palier (305,405).

8. Turbopompe (301,401) selon l'une quelconque des revendications 5 à 7, dans laquelle ledit arbre commun (302,402) est apte à adopter une position de repos, dans laquelle un joint à contact facial (317,417) est fermé autour de cet arbre, et à être axialement déplacé, à partir de cette position de repos, vers une position de marche dans laquelle ledit joint à contact facial (317,417) est ouvert, à l'encontre d'un effort de rappel exercé par au moins un élément élastique (316,416).

9. Turbopompe (301,401) selon la revendication 8, dans laquelle ladite pompe (303,403) présente un passage axial d'admission (303b,403b) situé sur un côté de cette pompe (303,403) qui est opposé audit premier palier (305,405), et ladite position de marche est située en direction de la pompe (303,403) par rapport à ladite position de repos.

10. Turbopompe (301,401) selon la revendication 9, dans laquelle, dans ladite position de marche, un élément axialement solidaire de l'arbre (302,402) mais libre en rotation par rapport à cet arbre fait butée contre un stator (307a, 407a) solidaire d'un carter (307,407) de la turbopompe (301,401) en direction de la pompe (303,403).

11. Turbopompe (301,401) selon l'une quelconque des revendications 9 ou 10, dans laquelle, dans ladite position de repos, un élément axialement solidaire de l'arbre (302,402) fait butée contre un stator (307b, 407b) solidaire d'un carter (307,407) de la turbopompe (301,401) en direction de la turbine (304,404).

12. Turbopompe (301,401) selon l'une quelconque des revendications 1 à 11, dans laquelle ladite source d'alimentation en gaz du palier hydrodynamique est la turbine (304,404).

13. Ensemble d'une turbopompe (301,401) selon l'une quelconque des revendications 1 à 11 et d'une chambre de propulsion, dans lequel ladite source d'alimentation en gaz du palier hydrodynamique est une sortie d'un circuit régénératif de la chambre de propulsion.

14. Moteur-fusée comprenant au moins une chambre de propulsion et au moins une turbopompe (301,401) selon l'une quelconque des revendications 1 à 12 pour l'alimentation en au moins un propergol de ladite au moins une chambre de propulsion.

15. Procédé d'utilisation d'une turbopompe (301,401) selon l'une quelconque des revendications 8 à 11, dans lequel le premier palier (305,405) est lubrifié par du fluide provenant de la pompe (303,403), ledit joint à contact facial (317,417) empêchant sensiblement le passage dudit fluide lubrifiant en direction du joint dynamique (311,411) et du deuxième palier (306,406) lorsque la turbopompe (301,401) est à l'arrêt, et s'ouvrant, lors du démarrage de la turbopompe (301,401), par un déplacement axial de l'arbre (302,402).

## Patentansprüche

1. Turbopumpe (301, 401), umfassend:
eine Pumpe (303, 403),
eine Turbine (304, 404),
eine gemeinsame Drehwelle (303, 402), die mit der Pumpe (303, 403) und mit der Turbine (303, 404) verbunden ist, und
ein erstes und ein zweites Lager (305, 405; 306, 406), welche die gemeinsame Drehwelle (302, 402) stützen, wobei das erste Lager (305, 405) sich näher an der Pumpe (303, 403) befindet und das zweite Lager (306, 406) an der Turbine (304, 404),
**dadurch gekennzeichnet, dass** das zweite Lager (306, 406) ein hydrodynamisches Lager ist, das mit einer Gasversorgungsquelle verbunden ist, und dadurch, dass sie ferner mindestens eine dynamische Dichtung (311, 411) um die Welle (302, 402) umfasst, die zwischen dem ersten und zweiten Lager (305, 405; 306, 406) angeordnet ist.

2. Turbopumpe (301, 401) nach Anspruch 1, wobei die Pumpe (302, 402) eine Pumpe für ein kryogenes Fluid ist.

3. Turbopumpe (301, 401) nach einem der Ansprüche 1 oder 2, wobei die Pumpe (302, 402) eine Raketentreibstoffpumpe ist.

4. Turbopumpe (401) nach einem der Ansprüche 1 bis 3, wobei die dynamische Dichtung (411) mit einer Quelle für inertes Fluid verbunden ist.

5. Turbopumpe (301, 401) nach einem der Ansprüche 1 bis 4, wobei das erste Lager (305, 405) mit der Pumpe (303, 403) für die Schmierung des ersten Lagers (305, 405) mit von der Pumpe (303, 403) stammendem Fluid verbunden ist.

6. Turbopumpe (301, 401) nach Anspruch 5, wobei das erste Lager (305, 405) ein Wälzlager ist.

7. Turbopumpe (301, 401) nach einem der Ansprüche 5 oder 6, die ferner eine Hilfspumpe (315, 415) für die Abführung des Fluids von dem ersten Lager (305, 405) umfasst.

8. Turbopumpe (301, 401) nach einem der Ansprüche 5 bis 7, wobei die gemeinsame Welle (302, 402) geeignet ist, eine Ruheposition einzunehmen, in der eine Dichtung mit Flächenkontakt (317, 417) um diese Welle geschlossen ist, und gegen eine Rückstellkraft, die durch mindestens ein elastisches Element (316, 416) ausgeübt wird, ausgehend von dieser Ruheposition hin zu einer Betriebsposition axial verlagert zu werden, in der die Dichtung mit Flächenkontakt (317, 417) offen ist.

9. Turbopumpe (301, 401) nach Anspruch 8, wobei die Pumpe (303, 403) einen axialen Einlassdurchgang (303b, 403b) aufweist, der sich auf einer Seite dieser Pumpe (303, 403) befindet, die dem ersten Lager (305, 405) gegenüberliegt, und die Betriebsposition sich in Bezug auf die Ruheposition in Richtung der Pumpe (303, 403) befindet.

10. Turbopumpe (301, 401) nach Anspruch 9, wobei in der Betriebsposition ein axial fest mit der Welle (302, 402) verbundenes, aber in Bezug auf diese Welle frei drehbares Element gegen einen Stator (307a, 407a) anschlägt, der fest mit einem Gehäuse (307, 407) der Turbopumpe (301, 401) in Richtung der Pumpe (303, 403) verbunden ist.

11. Turbopumpe (301, 401) nach einem der Ansprüche 9 oder 10, wobei in der Ruheposition ein axial fest mit der Welle (302, 402) verbundenes Element gegen einen Stator (307b, 407b) anschlägt, der fest mit einem Gehäuse (307, 407) der Turbopumpe (301, 401) in Richtung der Turbine (304, 404) verbunden ist.

12. Turbopumpe (301, 401) nach einem der Ansprüche 1 bis 11, wobei die Gasversorgungsquelle des hydrodynamischen Lagers die Turbine (304, 404) ist.

13. Baugruppe aus einer Turbopumpe (301, 401) nach einem der Ansprüche 1 bis 11 und einer Brennkammer, wobei die Gasversorgungsquelle des hydrodynamischen Lagers ein Ausgang eines regenerativen Kreislaufs der Brennkammer ist.

14. Raketentriebwerk, das mindestens eine Brennkammer und mindestens eine Turbopumpe (301, 401) nach einem der Ansprüche 1 bis 12 zur Versorgung der mindestens einen Brennkammer mit mindestens einem Raketentreibstoff umfasst.

15. Verfahren zur Verwendung einer Turbopumpe (301, 401) nach einem der Ansprüche 8 bis 11, wobei das erste Lager (305, 405) durch Fluid geschmiert wird, das von der Pumpe (303, 403) stammt, wobei die Dichtung mit Flächenkontakt (317, 417) im Wesentlichen den Durchgang des Schmierfluids in Richtung der dynamischen Dichtung (311, 411) und des zweiten Lagers (306, 406) verhindert, wenn die Turbopumpe (301, 401) abgestellt ist, und sich beim Start der Turbopumpe (301, 401) durch eine axiale Verlagerung der Welle (302, 402) öffnet.

## Claims

1. A turbopump (301, 401) comprising:
• a pump (303, 403);
• a turbine (304, 404);
• a common rotary shaft (302, 402) connected to said pump (303, 403) and to said turbine (304, 404); and
• first and second bearings (305, 405; 306, 406) supporting said common rotary shaft (302, 402), said first bearing (305, 405) being closer to the pump (303, 403), and said second bearing (306, 406) being closer to the turbine (304, 404);
the turbopump being **characterized in that** said second bearing (306, 406) is a hydrodynamic bearing connected to a gas supply source, and **in that** it also includes at least one dynamic sealing gasket (311, 411) around the shaft (302, 402) interposed between said first and second bearings (305, 405; 306, 406).

2. A turbopump (301, 401) according to claim 1, wherein said pump (302, 402) is a cryogenic fluid pump.

3. A turbopump (301, 401) according to claim 1 or claim 2, wherein said pump (302, 402) is a propellant pump.

4. A turbopump (401) according to any one of claims 1 to 3, wherein said dynamic sealing gasket (411) is connected to a source of inert fluid.

5. A turbopump (301, 401) according to any one of claims 1 to 4, wherein said first bearing (305, 405) is connected to the pump (303, 403) for lubricating the first bearing (305, 405) with fluid coming from the pump (303, 403).

6. A turbopump (301, 401) according to claim 5, wherein said first bearing (305, 405) is a rolling bearing.

7. A turbopump (301, 401) according to claim 5 or claim 6, further including an auxiliary pump (315, 415) for exhausting said fluid from the first bearing (305, 405).

8. A turbopump (301, 401) according to any one of claims 5 to 7, wherein said common shaft (302, 402) is suitable for adopting a rest position in which a facial contact seal (317, 417) is closed around the shaft, and for being moved axially from said rest position to a working position in which said facial contact seal (317, 417) is open, the movement being against a return force exerted by at least one resilient element (316, 416).

9. A turbopump (301, 401) according to claim 8, wherein said pump (303, 403) presents an axial admission passage (303b, 403b) situated at a end of said pump (303, 403) that is remote from said first bearing (305, 405), and said working position is situated towards the pump (303, 403) relative to said rest position.

10. A turbopump (301, 401) according to claim 9, wherein, in said working position, an axial element secured to the shaft (302, 402) but free to rotate relative to the shaft comes into abutment against a stator (307a, 407a) secured to a casing (307, 407) of the turbopump (301, 401) towards the pump (303, 403).

11. A turbopump (301, 401) according to claim 9 or claim 10, wherein, in said rest position, an axial element secured to the shaft (302, 402) comes into abutment against a stator (307b, 407b) secured to a casing (307, 407) of the turbopump (301, 401) towards the turbine (304, 404).

12. A turbopump (301, 401) according to any one of claims 1 to 11, wherein said gas supply source for the hydrodynamic bearing is the turbine (304, 404).

13. An assembly comprising a turbopump (301, 401) according to any one of claims 1 to 11 and a propulsion chamber, wherein said gas supply source for the hydrodynamic bearing is an outlet from a regenerative circuit of the propulsion chamber.

14. A rocket engine having at least one propulsion chamber and at least one turbopump (301, 401) according to any one of claims 1 to 12 for feeding at least one propellant to said at least one propulsion chamber.

15. A method of using a turbopump (301, 401) according to any one of claims 8 to 11, wherein the first bearing (305, 405) is lubricated by the fluid coming from the pump (303, 403), said facial contact seal (317, 417) substantially preventing said lubricating fluid from passing towards the dynamic gasket (311, 411) and the second bearing (306, 406) when the turbopump (301, 401) is stopped, and then opening on starting of the turbopump (301, 401) by the shaft (302, 402) moving axially.
